# EUROPEAN PATENT APPLICATION

(11) **EP 4 623 694 A1**
(43) Date of publication of application: **01.10.2025**
(21) Application number: 24169801.8
(22) Date of filing: 11.04.2024
(51) Int. Cl.: A21D 13/062, A23G 3/34, A23G 3/38, A23G 3/42, A23L 7/122, A23L 7/191, A23L 7/196, A23L 33/22, A23P 20/10

(54) **CARAMELIZED FOODSTUFF PRODUCT, METHODS AND USES THEREOF**

(30) Priority: 26.03.2024 PT 2024119350
(71) Applicant: Nolita Lda, 4150-106 Porto (PT)
(72) Inventor: VASCONCELOS, FERNANDA, 4050-273 PORTO (PT)
(74) Representative: Patentree

(57) **Abstract**

The present disclosure relates to a method for producing a caramelized foodstuff product and the caramelized foodstuff product thereof, preferably wherein the caramelized foodstuff is selected from a list comprising cereals, nuts, seeds, dried fruits, flavourings, or mixtures thereof.

The present disclosure also relates to a method for caramelizing foodstuffs or a unique formulation of caramelized food products like granola, flakes, bar and/or clusters.

## Description

### TECHNICAL FIELD

The present disclosure relates to a method for producing a caramelized foodstuff product and the caramelized foodstuff product thereof, preferably wherein the caramelized foodstuff is selected from a list comprising cereals, nuts, seeds, dried fruits, flavourings, or mixtures thereof.

The present disclosure also relates to a method for caramelizing foodstuffs or a unique formulation of caramelized food products like granola, flakes, bar and/or clusters.

### BACKGROUND

The success of many food products can be attributed to the application of coatings. These coatings serve various purposes, such as introducing novelty, enhancing visual appeal, shaping the product, improving taste, extending shelf life, creating texture. Changes in lifestyle, particularly in the contemporary world, have significantly contributed to the prevalence and sales of convenience foods, thereby supporting the growth and global reach of coated foods. Current research trends are driven by factors such as the automation of manufacturing processes, innovations in cooking methods, a growing demand for more sophisticated food options, diversification, and a commitment to developing healthier products with reduced fat.

However, such packaged food products are typically full of sugar, artificial sweeteners and/or additives, providing poor nutritional value. Granola, for instance, is a popular breakfast cereal and snack known for its crunchy texture and sweet flavour, often achieved through the incorporation of various sweeteners such as honey, maple syrup, or sugar. However, the high sugar content in traditional granola formulations poses challenges for consumers seeking healthier dietary options.

Excessive sugar intake is considered unhealthy for several reasons, including weight gain and obesity due to its high-calorie, low-nutrient nature. Furthermore, it contributes to insulin resistance, increasing the likelihood of developing type 2 diabetes, while also fostering dental issues such as tooth decay and cavities by fuelling oral bacteria. The impact extends to heart health, elevating the risk of heart disease through adverse effects on cholesterol and triglyceride levels, and promoting the onset of non-alcoholic fatty liver disease (NAFLD). Diets rich in sugar may also foster metabolic syndrome, which is linked to cardiovascular issues. Moreover, sugar intake correlates with chronic inflammation, potentially exacerbating various health conditions, and may even have implications for mental health. The addictive properties of sugar, activating brain reward centres and fostering cravings, compound these concerns, alongside its provision of empty calories, devoid of essential nutrients, further emphasizing the imperative of moderating sugar intake for overall well-being.

To promote health, it is advisable to limit added sugar intake, opt for whole foods, and be mindful of overall sugar consumption. However, consumers struggle to make the right choices, as they are mostly attracted by food appearance, beautiful packaging, and low prices.

Fiber provides a multitude of health benefits that are widely acknowledged. Firstly, it supports digestive health by promoting regular bowel movements and preventing constipation. Moreover, high-fibre foods contribute to weight management by inducing a feeling of fullness, thereby helping to control appetite and reduce overall calorie intake. Soluble fibre, in particular, plays a key role in regulating blood sugar levels by slowing down sugar absorption, making it especially beneficial for individuals with diabetes or those at risk of the condition. Additionally, fibre assists in maintaining heart health by binding to cholesterol, potentially lowering cholesterol levels and reducing the risk of heart disease and stroke. Furthermore, a fibre-rich diet is associated with a decreased risk of developing colorectal cancer, highlighting its importance for colon health. Studies also suggest that fibre-rich diets may help regulate blood pressure, promoting cardiovascular well-being. For individuals with irritable bowel syndrome (IBS), soluble fibre can help alleviate symptoms such as constipation or diarrhoea. Lastly, fibre acts as a prebiotic, fostering the growth of beneficial gut bacteria and improving overall gut health.

Inulin is a type of carbohydrate found in certain plants, such as chicory root, and it behaves differently from sucrose, the sugar typically used to make caramel. While inulin can be used as a sweetener and has some similar properties to sugar, it does not undergo the same chemical reactions as sucrose when heated and would not produce the characteristic flavour and texture of caramel. Inulin coat can be used to sweeten several products composed of cereals, nuts, seeds, dried fruits, spices, and others. However, the use of inulin contributes to a different mouthfeel and texture in the caramelized product, which may not be desirable. Thus, the substitution of sucrose by inulin is often a challenge, since the flavour, texture and shelf-life of products prepared using this fibre are often compromised as compared to products prepared with sugars. This can affect the overall sensory experience of the consumer.

It is recommended to consume a variety of fiber-rich foods, including fruits, vegetables, whole grains, legumes, nuts, and seeds. However, consumers prefer packaged food, because of its palatability, low price, and convenience.

These facts are disclosed in order to illustrate the technical problem addressed by the present disclosure.

### GENERAL DESCRIPTION

The present disclosure relates to a method for making a foodstuff product, using inulin as a sweetener, creating a caramel-like coat on the foodstuff. In an embodiment, the method allows to substitute unhealthy sugar with fibre (inulin), to give extra nutritional value to whole foods.

For the scope and interpretation of the present disclosure, a "caramelized foodstuff" is a food product comprising one or more ingredients subjected to the caramelization process, wherein sugars or (or sugar substitutes, like sweeteners) are present in the ingredients that undergo thermal decomposition, resulting in the formation of caramel compounds. The caramelization process imparts a sweet, caramelized flavor profile and may induce browning and textural changes in the food product. Caramelized foodstuffs can include various ingredients such as grains, nuts, seeds, dried fruits, and sweeteners, and may be processed into forms such as clusters, bars, or flakes.

The present disclosure provides a way to use inulin as a sweetener, creating a caramel-like coat in different kinds of food, and methods for its preparation.

An aspect of the present disclosure relates to a foodstuff product comprising:
a coated food ingredient;
10-50 %(w/w) of inulin;
wherein the inulin is caramelized;
the sugar content of the foodstuff end product is inferior to 15 g per 100g of foodstuff product;
fibre content (wherein the fibre content includes inulin) of the foodstuff end product is at least 12% (w/w); and
wherein the coated food ingredient is coated with the caramelized inulin.

In an embodiment for better results, inulin content of the foodstuff product is at least 40% (w/w); preferably at least 35% (w/w).

In an embodiment for better results, caramelized inulin content ranges from 20- 40 %(w/w); preferably 25 - 30 %(w/w).

In an embodiment for better results, the fibre content of the foodstuff product is at least 15% (w/w); preferably at least 20% (w/w).

In an embodiment for better results, fibre content of the foodstuff end product ranges from 12-20 %(w/w); preferably 12-16 %(w/w).

In an embodiment for better results, the sugar content of the foodstuff end product is less than 15% (w/w); preferably 10% (w/w); more preferably less than 5%(w/w).

In an embodiment for better results, the sugar content of the foodstuff end product ranges from 3 to 7 g per 100g of foodstuff product; preferably the foodstuff end product ranges from 5 to 6 g per 100g of foodstuff product.

In an embodiment for better results, the degree of polymerization of inulin ranges from 2 to 60; preferably degree of polymerization of inulin ranges from 5 to 20.

In an embodiment, the foodstuff product does not have added sugar.

In an embodiment, the coated food ingredient is selected from a list of cereals, nuts, seeds, dried fruits, or mixtures thereof, among others.

In an embodiment, the dried fruits are selected from a list consisting of raisins (dried grapes), apricots, figs, dates, prunes (dried plums), cranberries, cherries, mangoes, bananas, or combinations thereof.

In an embodiment, the nuts are selected from a list consisting of: almonds, hazelnuts, walnuts, cashews, pistachios, peanuts, or combinations thereof.

In an embodiment, the cereals are selected from a list consisting of: oat, wheat, rice, barley, corn, quinoa, or combinations thereof.

In an embodiment, the sweetener may be stevia, or monk fruit, or allulose, or erythritol, or maltitol, or xylitol, or combinations thereof.

In an embodiment, the caramelized foodstuff product of the present disclosure may further comprise spices, preferably cinnamon, mace, cloves, cardamom, anise, ginger, or mixtures thereof.

In an embodiment, the foodstuff product is selected from a list comprising breakfast cereals, granola, flakes, snack bars, cookies, crackers, caramelized nuts, donuts, among others.

In an embodiment, the inulin may be obtained from one or more plant sources selected from the group consisting of Agave spp., Musaceae (including Banana and plantain), Arctium lappa (Burdock), Camassia spp. (Camas), Cichorium intybus (Chicory), Echinacea spp. (Coneflower), Saussurea lappa (Costus), Taraxacum officinale (Dandelion), Inula helenium (Elecampane), Allium sativum (Garlic), Cynara scolymus and Cynara cardunculus var. scolymus (Globe artichoke), Helianthus tuberosus (Jerusalem artichoke), Pachyrhizus erosus (Jicama), Arnica montana (Leopard's bane), Artemisia vulgaris (Mugwort root), Allium cepa (Onion), Dioscorea spp. (Wild yam), and Smallanthus sonchifolius (Yacón), wherein the inulin extracted from the said sources provides enhanced prebiotic effects, improved texture, and/or increased fiber content in the foodstuff product.

Another aspect of the present disclosure relates to a method for making a caramelized foodstuff product comprising the following steps:
mixing the foodstuff with inulin powder;
spraying the foodstuff mixture with water to moisten;
heating the moisten foodstuff to produce the caramelized foodstuff, wherein the caramelized foodstuff is coated with caramelized inulin.
In an embodiment, the foodstuff product comprises oats, nuts, seeds, dried fruits, flavourings, or mixtures thereof.

Surprisingly, the method of the present disclosure allows the production of a caramelized foodstuff product with reduced sugar and increased fiber content, all the while preserving palatability and enhancing its nutritional value.

In an embodiment, the flavourings are selected from a list comprising spices, vanilla extract, cocoa powder, and mixtures thereof.

In an embodiment, the degree of polymerization of inulin ranges from 2 to 60.

In an embodiment, the moisture content of inulin ranges from 5 to 15% (w/w).

In an embodiment, the foodstuff mixture comprises 10% (w/w) to 50% (w/w) of inulin; preferably the foodstuff mixture comprises 20 (w/w) to 30% (w/w) of inulin.

In an embodiment, the heating step is conducted at a temperature ranging from 70 to 100 °C; for a duration of 15 to 60 minutes; preferably 20 to 50 minutes; preferably 20 to 30 minutes.

In an embodiment, the mass ratio between inulin powder and water ranges from 19:0.5 to 19:1.

In an embodiment, the foodstuff mixture further comprises spices, sweeteners, or mixtures thereof.

In an embodiment, the spices are selected from a list comprising cinnamon, mace, cloves, cardamom, anise, ginger, or mixtures thereof.

In an embodiment, the sweeteners are selected from a list comprising stevia, monk fruit, allulose, erythritol, maltitol, xylitol, or mixtures thereof.

### BRIEF DESCRIPTION OF THE DRAWINGS

The following figures provide preferred embodiments for illustrating the disclosure and should not be seen as limiting the scope of invention.

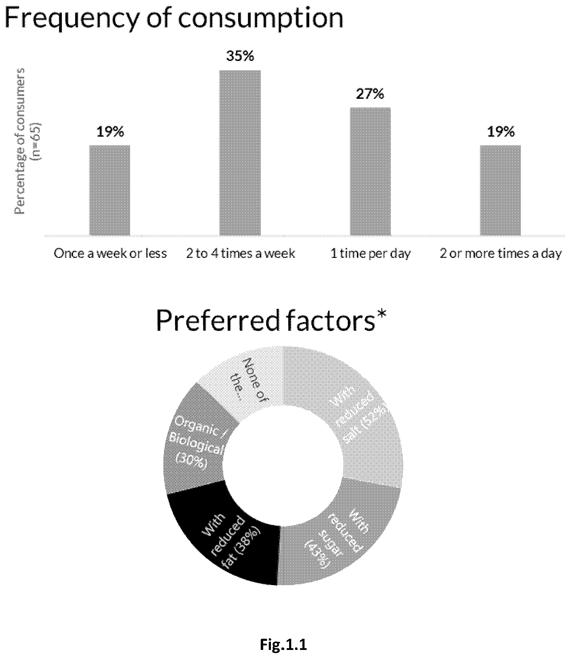

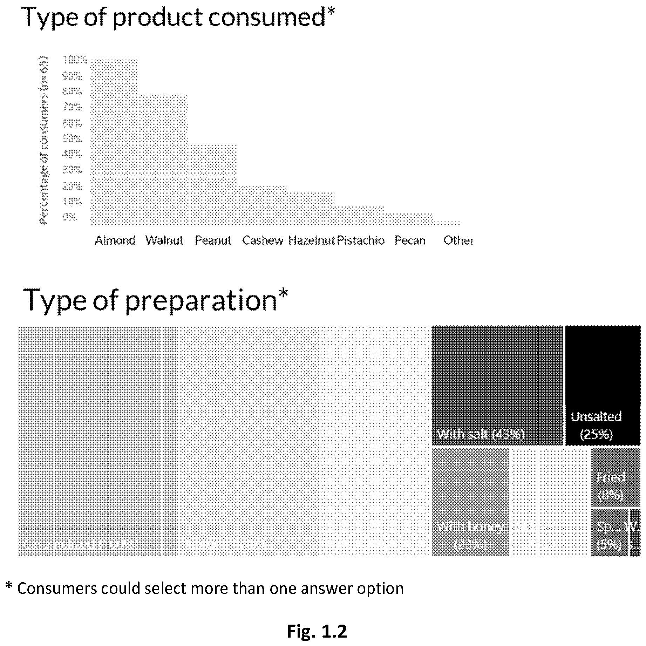

Figure 1 and 1.2: Schematic representation of consumer panel for the Sense Test database for answering a screening questionnaire.

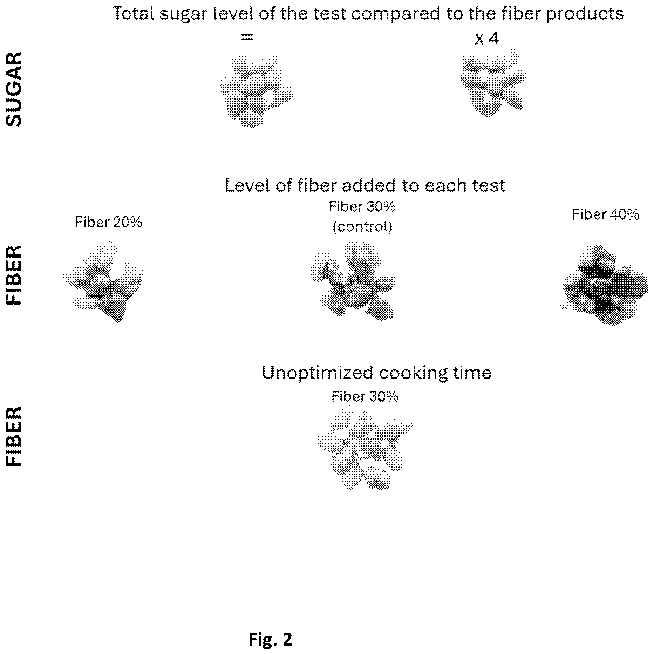

Figure 2: Schematic representation of the sample tested. The recipe of the samples was the same. Only the ingredient used to sweeten the product was changed. Three samples were sweetened with different levels of simple white sugar. Three samples were sweetened with different levels of inulin fiber. The last sample was sweetened with 30% (w/w) of inulin but we used a normal, unoptimized cooking time..

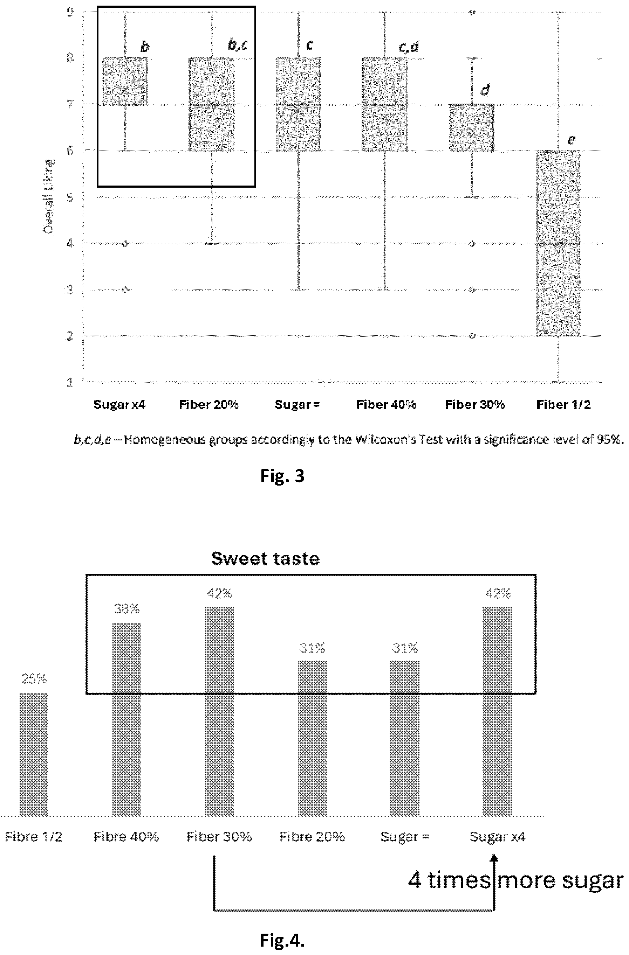

Figure 3: Schematic representation of the overall liking of the sample tested. There are no statistically relevant differences in the level of appreciation of the product with 20% (w/w) inulin, compared to samples of the same product in which the fiber was replaced by regular white sugar, in an amount that quadruples the total sugar level of the final product. This means that the foodstuff product of the present disclosure satisfies the consumer in the same way, without the health damaging consequences of the use of high sugar quantities. The sample with inulin and a non-optimized cooking time was the least appreciated. This means that the production method of the present disclosure time was crucial for the overall liking of the other fiber samples.
Figure 4: Schematic representation of sweetness of the sample tested. There are no statistically relevant differences in the level of sweetness detected by the consumes in the products with 20% inulin, 30% or 40% compared to samples of the same product in which the fiber was replaced by regular white sugar, in an amount that quadruples the total sugar level of the final product. This means that even though the sugar sample had 4 times more sugar, the sweetness felt during consumption was very similar than the samples sweetened with fiber. The sample with inulin and a non-optimized cooking time was considered the least sweet. This means that our optimization of the cooking time was crucial for the sweetness filled in the other fiber samples.

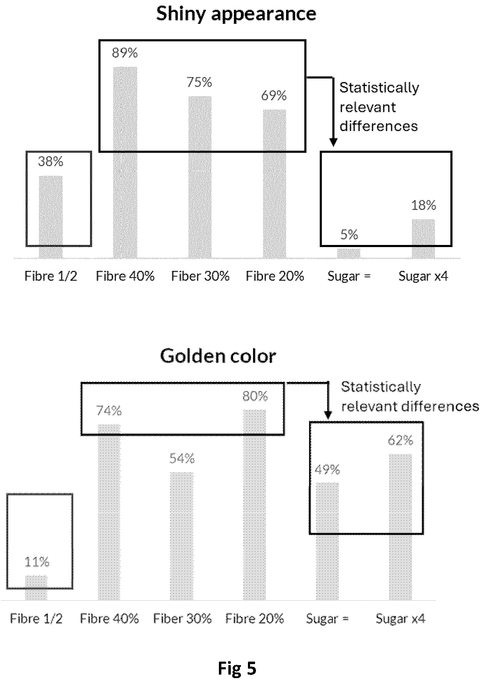

Figure 5: Schematic representation of the shiny appearance and golden color of the sample tested. Statistically relevant differences were identified between the shiny appearance of the fiber samples versus the sugar samples. In the inulin samples, the caramel was identified much more frequently. Statistically relevant differences were identified between the golden appearance of the inulin samples (20% and 40%) versus the sugar samples. In the fiber samples, the golden color was identified much more frequently. The sample with inulin and a non-optimized cooking time was an exception, showing statistically relevant differences when compared with the other fiber samples, in the evaluation of the shiny appearance and the golden color.

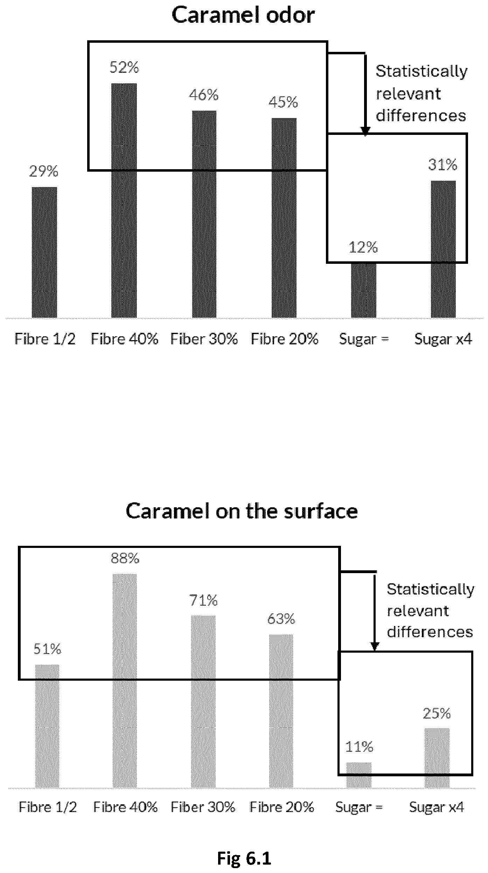

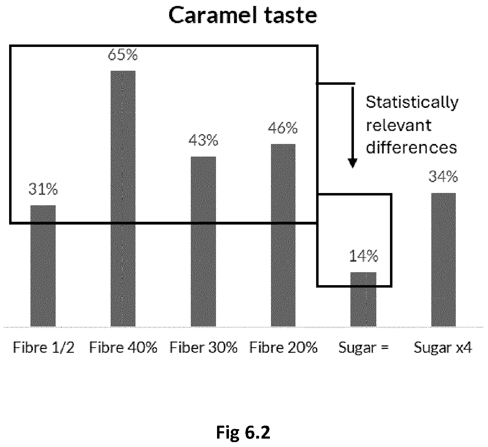

Figure 6.1 and 6.2: Schematic representation of the odor, surface and tastes of the caramel . Statistically relevant differences were identified between the presence of caramel odor of the fiber samples versus the sugar samples. In the inulin samples, the caramel was identified much more frequently, except in the fiber sample cooked at a no optimized time. Statistically relevant differences were identified between the presence of caramel on the surface of the fiber samples versus the sugar samples. In the inulin samples, the caramel was was identified much more frequently. Statistically relevant differences were identified between the caramel taste of the fiber samples versus the sugar sample with the same total amount of sugar in the recipe. When comparing the inulin 40% (w/w) with the sugar sample with 4 times more sugar, we also found statistically relevant differences.

### DETAILED DESCRIPTION

The present disclosure relates to a method for producing a caramelized foodstuff product and the caramelized foodstuff product thereof, preferably wherein the caramelized foodstuff is selected from a list comprising cereals, nuts, seeds, dried fruits, flavourings, or mixtures thereof.

The present disclosure also relates to a method for caramelizing foodstuffs or a unique formulation of caramelized food products like granola, flakes, bar and/or clusters.

The caramelized food product resulting from this disclosure boasts a high fiber content and low sugar, surprisingly exhibiting an extended shelf life. Throughout this period, its texture maintains a chewy consistency without becoming sticky, crumbly, or hard. The minimum shelf-life spans at least one month, ideally extending to two months, preferably three months, more preferably at least 6 months to at least a year.

In an embodiment, the disclosed foodstuff end product has high levels of fiber (including inulin), i.e., at least 20 g per 100 g. In a further embodiment, the disclosed foodstuff end product has a low sugar content (sucrose or glicose), i.e., less than 15g per 100g, although they are still sweet.

In an embodiment, the disclosed foodstuff product comprises about 25% (w/w) to 50% (w/w) of caramelized inulin. The inulin has a degree of polymerization (D.P) ranging from about 2-60% and moisture between 5% and 15% (w/w).

In an embodiment, the caramelization process is made under 100°C, to ensure that the gut health properties of inulin are preserved, and that the resulting products are crunchy.

In another embodiment, the foodstuff product may further comprise other sweeteners like stevia, monk fruit, allulose, erythritol, maltitol, xylitol, and others. That way, inulin can be used as a low-calorie sugar substitute, with high β-glucan content which provides nutrients to the body and improves gut health.

In an embodiment, the disclosed method can be applied to make distinct caramelized foodstuff products, such as breakfast cereals, granola, snack bars, cookies, crackers, donuts among others.

In an embodiment, the disclosed method comprises a thermomechanical process for forming a coating, in particular a caramel-like coating, that involves a multitude of steps: the combination of specific ingredients with the inulin to create the coating, the way they are applied to the rest of the food and the different temperatures that they are subjected to. This process allows for the creation of fibre-rich food products with low sugar content, that are crunchy and sweet. The scalability of the disclosed method is possible with small adjustments to the existing manufacturing processes, which would be evident to the skilled person.

In an embodiment, the caramelized inulin coating can be used to sweeten several food products composed of cereals, nuts, seeds, dried fruits, and others. All the ingredients, i.e., inulin and the desired products, are mixed carefully to obtain a homogeneous mixture. Then, inulin powder with a D.P. ranging from about 2-60 % and moisture between 5% and 15% (w/w) is added to the food products, making a mixture comprising 10% to 50% (w/w) of inulin; preferably 25% to 50% (w/w) of inulin.

In a further embodiment, to enhance the flavors, spices can be added to the inulin, such as cinnamon, mace, cloves, cardamom, anise, ginger, among others.

In a yet further embodiment, to increase the sensation of sweetness, one or several sweeteners can be added to the inulin, like stevia, monk fruit, allulose, erythritol, maltitol, xylitol, and others.

In an embodiment, the inulin powder or inulin powder mixed with spices and/or sweeteners, is added to the unbaked food product or food product blend. The powdered ingredients shall be carefully mixed with the unbaked foods to ensure that the sweetness and crunchiness of the coating has an effect on the entire product.

In an embodiment, before heating the products, the obtained mixture (powder and food product) is sprayed with water at room temperature. The water shall be sprayed because the water quantity is low (less than 5%(w/w) of the inulin weight). Spraying shall be done in such a way as to leave an identical amount of water throughout the product.

In one embodiment, the sprayed products undergo heating within a temperature range of 70 to 100 °C for a duration spanning 10 to 60 minutes; preferably 20 to 30 minutes. This temperature range is sufficient to facilitate the caramelization of water and the removal of moisture from the carbohydrate. Subsequently, isomerization and polymerization processes occur, manifesting as melting, boiling, foaming, and darkening of the coating. Concurrently, this gentle heating preserves the gut health properties of the inulin and the beneficial unsaturated fats inherent in nuts, seeds, and other foods rich in these fats present in the products. The duration of this process varies depending on the specific food products being coated.

In an embodiment, as soon as the caramelization process has taken place, the products are cool down at room temperature. The caramelized paste surrounding the products becomes shiny and crunchy, giving the food a high level of attractiveness, similar to the one usually seen in sugary food. In that way, customers are more prone to eat healthy food, boosting their levels of fiber intake, without sacrificing taste and flavor.

In an embodiment, the resulting product is a crispy uniform product. This process is suitable to make cereal/nut bars, cookies, crackers, donuts, granola, among others.

In an embodiment, if the coating is applied to a granola (or another product in which it is essential to restore the separation of the original ingredients), a final step of separation can be performed. To separate the original ingredients from each other, a mechanical force can be used that is strong enough to perform the separation but gentle enough to preserve the original form of the ingredients, in particular nuts and oats. This step shall be taken when the product has reached room temperature. At this moment, the product is not sticky anymore, but it is not too hard, so it is easily breakable into its original ingredients.

For the scope and interpretation of the present disclosure it is defined that "room temperature" should be regarded as a temperature between 15-30 °C, preferably between 18-25 °C, more preferably between 20-22 °C; in particular 20 °C.

It was performed an analysis to evaluate the consumer perception of seven different caramelized almond samples, with the incorporation of different levels of sugar and fiber (including inulin). The focus of the study was to perform an exercise to identify the attributes perceived by consumers and compare them between the different samples.

The test was performed by an independent company named Sense Test. A sensitive methodology was used to detect small changes in formulation that may bring sensory implications to the final product - Rate-All-That-Apply (RATA).

On a 9-point hedonic scale, the overall acceptance of the four samples was evaluated. The test was carried out by independent evaluation of samples by consumers using statistic tests to detect significant differences in the reference scores. The samples were presented in a monadic and sequential manner following a balanced presentation order and encoded with three-digit codes. The brand of the product and the name of the manufacturer have not been shared with the consumers to ensure objectivity in the evaluation.

The experimental data show that the fiber-based sweetener solution of the present disclosure, namely the use of inulin bases sweetener, is effective and even more powerful than sugar.

When comparing the food product disclosed herein to an identical product where fiber is substituted with regular white sugar, resulting in a fourfold increase in the total sugar content of the final product, the following observations were made:
- It delivers an equivalent level of satisfaction (overall liking);
- It offers the same perceived sweetness;
- It imparts the same perceived caramel flavor;
- Evaluation of its shiny appearance scored 57 percentage points higher;
- Its golden color evaluation was 18 percentage points higher;
- Perception of caramel odor was 15 percentage points higher.

The presence of caramel on the surface was noted more frequently, with a 46% percentage point increase.

The alternative product with 4 times more sugar has also 4 times less fiber. This means that the process of the present disclosure produces a healthier sweetener solution and provides at least the same level of satisfaction and pleasure.

The pour results of the fiber product that was made with an unoptimized cooking time prove that the ingredients of our sweetener solution are not enough to produce the desired result. All the process created was optimized to provide sweetness and caramelization. It also guarantees the same shelf life of the same product with other kinds of natural sweeteners. The shelf life of the product that was made with an unoptimized cooking time is very short (less than one month).

The term "comprising" whenever used in this document is intended to indicate the presence of stated features, integers, steps, components, but not to preclude the presence or addition of one or more other features, integers, steps, components or groups thereof.

As used in the specification and claims, the singular forms "a", "an" and "the" include plural references unless the context clearly dictates otherwise. For example, the term "a sample" includes a plurality of samples, including mixtures thereof.

Whenever the term "at least," "greater than," or "greater than or equal to" precedes the first numerical value in a series of two or more numerical values, the term "at least," "greater than" or "greater than or equal to" applies to each of the numerical values in that series of numerical values. For example, greater than or equal to 1, 2, or 3 is equivalent to greater than or equal to 1, greater than or equal to 2, or greater than or equal to 3.

As used herein, the term "about" a number refers to that number plus or minus 10% of that number. The term "about" a range refers to that range minus 10% of its lowest value and plus 10% of its greatest value.

Furthermore, it is to be understood that the invention encompasses all variations, combinations, and permutations in which one or more limitations, elements, clauses, descriptive terms, etc., from one or more of the claims or from relevant portions of the description is introduced into another claim. For example, any claim that is dependent on another claim can be modified to include one or more limitations found in any other claim that is dependent on the same base claim.

Furthermore, where the claims recite a composition, it is to be understood that methods of using the composition for any of the purposes disclosed herein are included, and methods of making the composition according to any of the methods of making disclosed herein or other methods known in the art are included, unless otherwise indicated or unless it would be evident to one of ordinary skill in the art that a contradiction or inconsistency would arise.

Where ranges are given, endpoints are included. Furthermore, it is to be understood that unless otherwise indicated or otherwise evident from the context and/or the understanding of one of ordinary skill in the art, values that are expressed as ranges can assume any specific value within the stated ranges in different embodiments of the invention, to the tenth of the unit of the lower limit of the range, unless the context clearly dictates otherwise. It is also to be understood that unless otherwise indicated or otherwise evident from the context and/or the understanding of one of ordinary skill in the art, values expressed as ranges can assume any subrange within the given range, wherein the endpoints of the subrange are expressed to the same degree of accuracy as the tenth of the unit of the lower limit of the range.

The disclosure should not be seen in any way restricted to the embodiments described and a person with ordinary skill in the art will foresee many possibilities to modifications thereof.

The above described embodiments are combinable.

The following claims further set out particular embodiments of the disclosure.

## Claims

1. Foodstuff product comprising
a coated food ingredient;
10-50 %(w/w) of caramelized inulin;
wherein the sugar content of the foodstuff end product is inferior to 15 g per 100g of foodstuff product;
wherein the fibre content of the foodstuff end product is at least 12% (w/w); and
wherein the coated food ingredient is coated with the caramelized inulin.

2. Foodstuff product according to the previous claim wherein the caramelized inulin content ranges from 20 - 40 %(w/w); preferably 25 - 30 %(w/w).

3. Foodstuff product according to any of the previous claims wherein the fibre content of the foodstuff product is at least 15% (w/w); preferably at least 20% (w/w).

4. Foodstuff product according to any of the previous claims wherein the fibre content of the foodstuff end product ranges from -12-20 %(w/w); preferably 12-16 %(w/w).

5. Foodstuff product according to any of the previous claims wherein the sugar content of the foodstuff end product is less than 15% (w/w), preferably 10% (w/w), more preferably less than 5%(w/w).

6. Foodstuff end product according to any of the previous claims wherein the sugar content of the foodstuff end product ranges from 3 to 7 g per 100g of foodstuff product; preferably the foodstuff end product ranges from 5 to 6 g per 100g of foodstuff product.

7. Foodstuff product according to any of the previous claims wherein the degree of polymerization of inulin ranges from 2 to 60, preferably degree of polymerization of inulin ranges from 5 to 20.

8. Foodstuff product according to any of the previous claims wherein the foodstuff product does not have added sugar.

9. Foodstuff product according to any of the previous claims wherein the coated food ingredient is selected from of: cereals, nuts, seeds, dried fruits, or mixtures thereof.

10. Foodstuff product according to any of the previous claims wherein the foodstuff product is selected from a list comprising breakfast cereals, granola, flakes, snack bars, cookies, crackers, caramelized nuts or donuts.

11. Method for making a foodstuff product comprising the following steps:
mixing the foodstuff with inulin powder; preferably wherein the degree of polymerization of inulin ranges from 2 to 60 and/or the moisture content of inulin ranges from 5 to 15% (w/w);
spraying the foodstuff mixture with water to moisten;
heating the moisten foodstuff to produce the caramelized foodstuff, wherein the caramelized foodstuff is coated with caramelized inulin.

12. Method according to any of the previous claim 11 wherein the foodstuff mixture comprises 10% (w/w) to 50% (w/w) of inulin; preferably wherein the foodstuff mixture comprises 20 (w/w) to 30% (w/w) of inulin.

13. Method according to any of the previous claim 11-12, wherein the heating step is conducted at a temperature ranging from 70 to 100 °C, for a duration of 10 to 60 minutes.

14. Method according to any of the previous claims 11-13, wherein the mass ratio between inulin powder and water ranges from 19:0.5 to 19:1.

15. Method according to any of the previous claims 11-14, wherein the foodstuff mixture further comprises spice, sweetener, or mixtures thereof; preferably wherein the spice is selected from a list comprising cinnamon, mace, cloves, cardamom, anise, ginger, or mixtures thereof and/or; wherein the sweetener is selected from a list comprising stevia, monk fruit, allulose, erythritol, maltitol, xylitol, or mixtures thereof.
